# EUROPEAN PATENT SPECIFICATION

(11) **EP 3 120 705 B1**
(45) Date of publication and mention of the grant of the patent: **04.07.2018**
(21) Application number: 16178881.5
(22) Date of filing: 11.07.2016
(51) Int. Cl.: A21C 1/00, A21C 1/06, A21D 8/02, B01F 15/02

(54) **PROCESS FOR THE PREPARATION OF A PASTY FOOD COMPOUND**
VERFAHREN ZUR HERSTELLUNG EINER PASTÖSEN LEBENSMITTELVERBINDUNG
PROCÉDÉ POUR LA PRÉPARATION D'UN COMPOSÉ ALIMENTAIRE PÂTEUX

(30) Priority: 23.07.2015 IT UB20152424
(43) Date of publication of application: 25.01.2017
(73) Proprietor: BRAVO S.p.A., 36075 Montecchio Maggiore (Vicenza) (IT)
(72) Inventor: Bravo, Genesio, 36050 Sovizzo (VI) (IT); Bravo, Stefano, 36050 Sovizzo (VI) (IT)
(74) Representative: Martegani, Franco

(56) References cited:
- EP-A1- 0 496 441
- EP-A2- 2 067 407
- CA-A1- 2 451 627
- US-A1- 2012 044 781
- Anonymous: "Choux Pastry", Time To Cook - Online, 22 January 2012 (2012-01-22), pages 1-12, XP055240091, Retrieved from the Internet: URL:http://timetocookonline.com/2012/01/22 /choux-pastry/ [retrieved on 2016-01-11]

## Description

The present invention relates to a process for the preparation of a pasty food compound to be used in pastry making and gastronomy.

The present invention falls within the technological field of the processing of food compounds that must be subjected, for their preparation, to a single thermal treatment, or combined with heating and cooling or vice versa.

An example of a food compound of this type is so-called choux pastry consisting of liquid and solid ingredients such as water, butter, flour and eggs and used for the preparation of cream puffs, eclairs, donuts, profiteroles and the like.

The process for the preparation of this food compound traditionally provides that the flour be first hot processed with water, butter and salt and the compound, once cooled, is then joined to the eggs, before being cooked in various forms, thanks, for example, to the help of a pastry bag.

Machines are known in the field for processing food compounds (such as ice-cream, custard cream, chocolate, gastronomical products or the like) subjected to single or combined thermal treatment inside at least one cylindrical container or tank provided with a suitable mixer or stirrer, axially rotatable, and cooling/heating systems for controlling the temperature of the compound, normally positioned on the outer surface of said container or tank.

So-called combined machines for the treatment of food compounds in gastronomy, pastry making and ice-cream making comprise an upper tank and a lower horizontal cylinder, operatively interconnected by means of a duct, and both heated and/or cooled.

Combined machines for the pasteurization and whisking of food compounds are known for example on the market, with the trade-name "TRITTICO"® of Bravo S.p.A..

With an increase on the market in the request for pasty food compounds to be used for the preparation of sweet or savoury food products, the demand for producing these compounds in large quantities has also grown, maintaining a high level of both the organoleptic and structural characteristics such as compactness, consistency and softness, in addition to hygienic preparation conditions.

A high quality of the food compound can only be obtained by means of an extremely precise control of the preparation phases, the processing temperatures and mixing rates of its components.

The objective of the present invention is to find a process which is extremely simple, economical and functional for the preparation in continuous and in large quantities of a pasty food compound to be used in pastry making and gastronomy.

The invention achieves the above objectives by means of a process with the characteristics specified in the enclosed claims.

In particular, the process according to the present invention is effected inside a machine comprising at least one upper tank and at least one lower horizontal cylinder, said tank and said cylinder being provided with stirring and/or mixing means and heating/cooling means.

The process comprises:
- a first phase for the formation of a liquid mixture based on liquid and solid ingredients, inside said upper tank ;
- a second phase for transforming said liquid mixture into a pasty compound by the addition of solid or semi-liquid thickeners, such as flour and/or eggs, mixed inside said lower horizontal cylinder,
   said upper tank and said lower horizontal cylinder being operatively interconnected with each other by means of a duct and said liquid mixture being transferred to said lower cylinder by gravity.

Thanks to the process object of the present invention, the ingredients used for the preparation of the pasty food compound follow a path inside the machine that prevents any type of contamination from the outside environment, making the preparation process of the pasty food compound completely safe from a hygienic point of view.

Furthermore, the upper tank and the lower cylinder can operate independently of each other and simultaneously, with the great advantage of saving time in the preparation of the pasty food compound. Thanks to the present machine, the first preparation phase of the liquid mixture can be effected in the upper tank, by heating and mixing the solid and liquid ingredients and, contemporaneously, the preparation phase of the pasty compound can be effected, by heating and subsequent cooling and the addition of further ingredients, in the lower cylinder.

The complete preparation cycle of the pasty food compound comprises, in fact, a first preparation phase of a liquid mixture in the upper tank.

The mixture thus prepared is discharged, by gravity, through a duct provided with a control valve, into the lower horizontal cylinder, to be further processed, thus freeing the upper tank into which a new dose of ingredients can be poured, after closing the valve, bringing the machine to a condition in which the two containers, upper tank and lower cylinder, are operating contemporaneously and independently of each other.

At the end of the processing in the lower cylinder, the pasty food compound can be extracted for the subsequent cooking phase.

These and other characteristics and advantages of the present invention will appear more evident from the following description of some embodiments illustrated in the enclosed drawings, in which:
figure 1 schematically shows a machine for implementing the process according to the present invention;
figure 2 shows a front view of the front cover or flange of the lower cylinder of a machine for implementing the process according to the present invention;
figure 3 shows a view, from above, of the hopper provided on the front cover or flange of the lower cylinder of a machine for implementing the process according to the present invention;
figure 4 shows the discharge opening of the finished food compound provided on the flange illustrated in figure 2;
figure 5 illustrates a symmetry axis of the front cover or flange of the lower cylinder, showing, through the discharge opening, the mixer axially rotatable inside the lower cylinder of a machine for implementing the process according to the present invention.

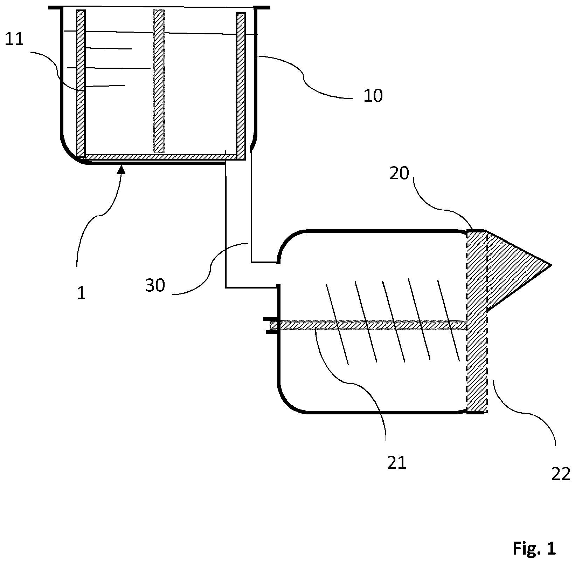

With reference to the figures, in particular to figure 1, the machine, indicated as a whole with 1, comprises an upper tank 10 and a lower horizontal cylinder 20 for the thermal treatment of solid and liquid ingredients, said upper tank 10 and said lower horizontal tank 20 being positioned superimposed and operatively interconnected with each other by means of a duct 30 controlled by a valve, such as a throttle valve, with manual or mechanical actuation.

The liquid and solid ingredients mixed with each other pass from the tank 10 to the underlying container 20 by gravity.

The upper tank 10 is traditionally provided with a cover, a rotating stirrer provided with blades 11 and a heating/cooling system, not shown, consisting for example of coils or plates that envelop at least part of the side wall or mantle and the bottom of said tank 10.

Again with reference to figure 1, the lower horizontal cylinder indicated as a whole with 20, is of the traditional type and is advantageously provided with an internal axially rotatable mixer 21, a heating/cooling system, such as a coil on the outer surface of said cylinder, not illustrated, in addition to a front cover or flange 22.

Said tank 10 and/or said cylinder 20 can be provided with at least one temperature sensor, that can be positioned on the rear and/or front wall, and/or on the mantle wall, and/or they can be provided with a level indicator or probe which allows the content of the two containers 10 and 20 to be automatically determined and consequently also when the ingredients forming the pasty food compound must be added.

According to an embodiment, the upper tank 10 and the lower horizontal cylinder 20 substantially have the same capacity.

According to an embodiment, the heating of the ingredients inside the lower horizontal cylinder 20, effected in order to facilitate the mixing and optimize the viscosity of the end-product, is obtained by the injection of hot gas, inside a coil positioned around the walls of said cylinder 20, coming from the supply compressor of said machine 1.

A bypass duct provided with an electrovalve can be provided, which allows the recirculation of the hot gas from the compressor to the coil, exploiting the heating of the electric motor of the machine 1.

In this embodiment, the heating power is strictly linked to the type of compressor. Both the temperatures inside the tank 10 and the cylinder 20, and also the rate of the motor that activates the stirrer and mixer 21 present in the tank 10 and cylinder 20, are electronically controlled in order to optimize the preparation of the desired formulation.

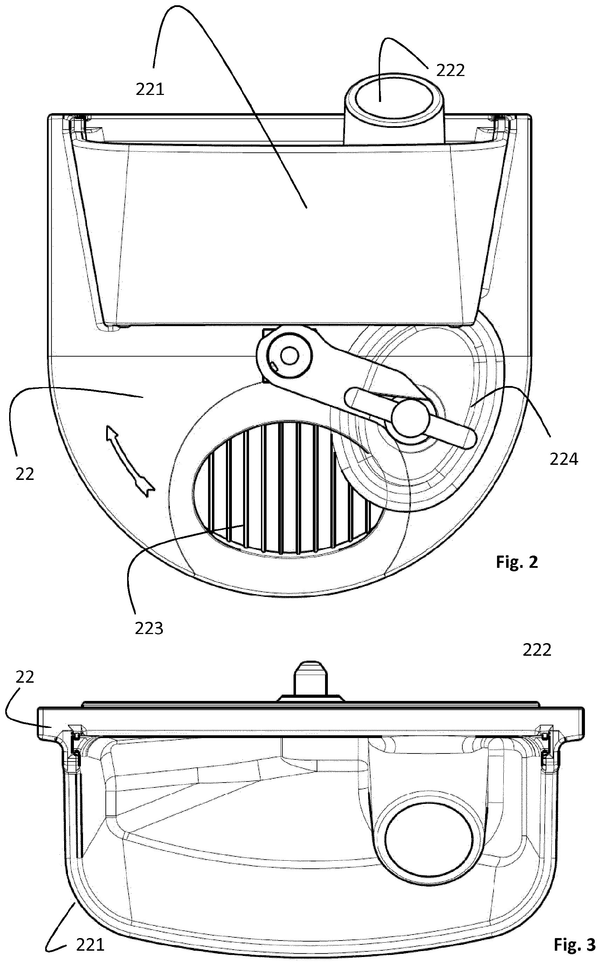

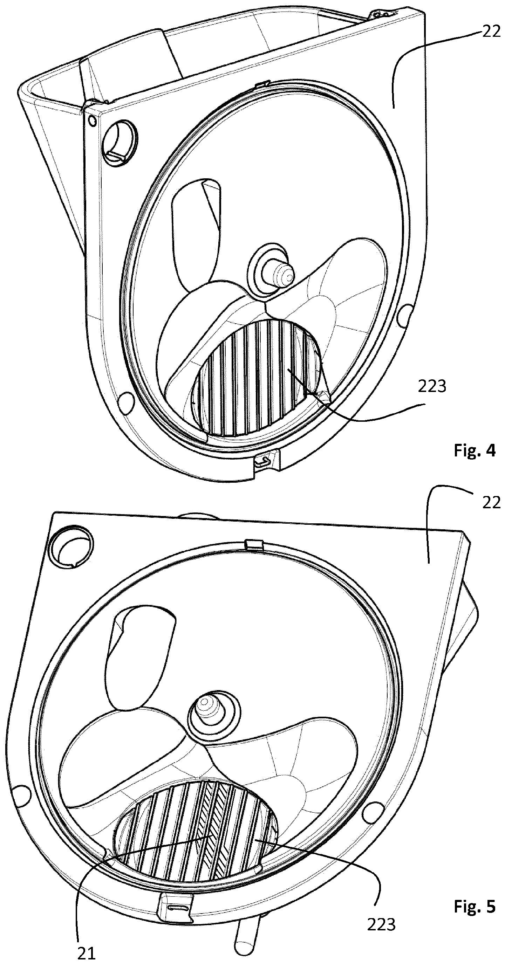

With reference to figures 2 to 5, said lower horizontal cylinder 20 is closed in the front by a flange 22 which comprises a hopper 221 with a closed bottom and provided with an opening or circular duct 222 for the insertion of a funnel for charging the ingredients, in addition to the rear feeding duct 30, from the upper tank 10 to the lower horizontal cylinder 20, of the product to be processed.

Alternatively, said hopper 221 can have a funnel-shaped duct for charging the ingredients.

Said flange 22 also comprises a discharge opening 223 of the finished food compound, controlled by a door 224.

Said door 224 is advantageously shaped complementary to the opening 223 with a cam-type closing, which prevents the formation of clots between the safety bars provided on the opening 223.

The process for the preparation of a food compound having a pasty consistency, to be used in pastry making or gastronomy, such as choux pastry or the like, according to the present invention, comprises a first phase for the formation of a liquid mixture inside the upper tank 10 and a second phase for transforming said liquid mixture into a pasty compound by the addition of solid or semi-liquid thickening ingredients, inside the lower horizontal cylinder 20.

Thanks to the liquid consistency, the mixture prepared in the upper tank 10 is transferred by gravity to the lower horizontal cylinder 20 through the duct 30.

In particular, the first phase of the preparation of the pasty food compound such as choux pastry, comprises:
- hot stirring of the solid and liquid ingredients such as water, butter and salt;
whereas the second phase comprises:
- addition and hot mixing of at least one thickening and stabilizing ingredient, such as flour;
- cooling the mixture;
- addition and cold mixing of at least one thickening and gelling agent such as eggs;
- mixing the end-product.

The phases of the process are carried out in continuous thanks to the machine 1, such as that described above, which is able to guarantee the consecutive implementation of the various phases and which is provided with specific heating/cooling and stirring/mixing means.

In particular, the hot stirring of the solid and liquid ingredients such as water, butter and salt is carried out inside the upper tank 10.

The first phase for the formation of a liquid mixture inside the upper tank 10 is in fact effected at a temperature ranging from 80 to 100°C, under stirring, at a rate ranging from 90 to 120 rpm.

The stirring is effected for the time necessary for reaching the preset temperature.

Said temperature, combined with the stirring of the ingredients effected by the blades of the stirrer 11 provided in said tank 10, facilitates the dispersion and homogenization of the butter with the water and salt.

In order to favour the addition of the flour, the lower horizontal cylinder 20 is contemporaneously heated.

When the mixing in the tank 10 has been completed, the contents of the tank 10 are transferred by gravity, through the duct 30, into the heated lower horizontal cylinder 20, after opening the throttle valve.

The process provides the addition of flour through the opening 222 situated in the hopper 221 of the flange 22.

In order to favour the incorporation of the flour, the mixer 21 positioned inside the horizontal cylinder 20, is activated.

The addition and hot mixing of at least one thickening and stabilizing ingredient such as flour, in the lower horizontal cylinder 20 during the second phase for transforming said liquid mixture into a pasty compound, takes place at a temperature ranging from 60 to 80°C, under stirring, at a rate ranging from 15 to 50 rpm, for a time ranging from 1 to 15 minutes and at a rate ranging from 95 to 140 rpm, for a time ranging from 1 to 20 minutes.

Said step is followed by a cooling step of the compound to a temperature ranging from 30 to 60°C at a mixing rate ranging from 15 to 50 rpm.

The addition and cold mixing of at least one thickening and gelling agent such as eggs, in the lower horizontal cylinder 20 during the second phase for transforming said liquid mixture into a pasty compound, takes place at a temperature ranging from 20 to 60°C, under stirring, at a rate ranging from 75 to 100 rpm, for a time established by the user.

Said step is followed by a mixing step of the end-product at a mixing rate ranging from 15 to 50 rpm, before exiting through the opening 223 provided on the flange 22.

The contents of the cylinder 20 are then subjected to pulse cooling and mixing at a low rate to allow the insertion of the eggs, provided in the formulation for the preparation of choux pastry.

The insertion of the eggs is effected with an alternating rate, high and low, of the mixer 21 positioned inside said lower horizontal cylinder 20.

Thanks to a computerized electronic system, there is a continuous management and control of the temperatures, stirring rates and mixing and viscosity of the mixture and compound in both the upper tank 10 and in the lower horizontal cylinder 20.

Thanks to the process according to the present invention, the preparation drawbacks according to the known art have been solved, in particular the lengthy preparation times for large quantities of pasty food compound and the risks of contamination during the various preparation phases.

Thanks to the machine 1, which provides two intercommunicating containers 10 and 20, all the production phases are englobed in a single machine with continuous functioning, wherein the liquid mixture prepared in the first phase in the upper tank 10 is discharged into the lower horizontal cylinder 20 for further processing, whereas another dose of ingredients can be contemporaneously mixed in the upper tank 10 to be introduced into the lower horizontal cylinder immediately after it has been emptied, and so forth. The whole process being effected without the ingredients leaving the machine for a single moment until the end of the production, consequently under conditions of absolute hygiene and in the complete absence of manual interventions on the mixture and compound on the part of the operator, from the charging of the ingredients into the upper tank 10 to the collection of the finished pasty compound, ready for cooking.

The washing of the machine 1 is also effected with a closed cycle without any possibility of anthropogenic or environmental contamination.

The invention is not limited to the embodiments described above but variations and/or modifications can be applied to the process object of the present invention, without being excluded from the inventive concept described and claimed herein.

## Claims

1. A process for the preparation of a pasty food compound to be used in pastry making and gastronomy, such as choux pastry or the like, said process comprising:
- a first phase for the formation of a liquid mixture based on liquid and solid ingredients;
- a second phase for transforming said liquid mixture into a pasty compound by the addition of solid or semi-liquid thickeners, such as flour and/or eggs, which are mixed inside a lower horizontal cylinder,
**characterized in that** said process is effected inside a machine (1) comprising at least an upper tank (10) and at least a lower horizontal cylinder (20), said tank (10) and said cylinder (20) being provided with stirring and/or mixing means and heating/cooling means,
said upper tank (10) and said lower horizontal cylinder (20) being operatively interconnected with each other by means of a duct (30) and said liquid mixture being transferred to said lower cylinder (20) by gravity,
the method provides that:
- said first phase for the formation of a liquid mixture based on liquid and solid ingredients is effected inside said upper tank (10);
- said second phase for transforming said liquid mixture into a pasty compound by the addition of solid or semi-liquid thickeners, such as flour and/or eggs, mixed inside a lower horizontal cylinder, is effected inside said lower horizontal cylinder (20).

2. The process according to claim 1, **characterized in that** said first phase for the formation of a liquid mixture comprises the hot stirring of solid and liquid ingredients such as water, butter and salt in the upper tank (10), whereas the second phase for transforming said liquid mixture comprises, in the lower horizontal cylinder (20):
- the addition and hot mixing of at least one thickening and stabilizing ingredient, such as flour;
- cooling the mixture;
- the addition and cold mixing of at least one thickening and gelling agent, such as eggs;
- mixing the end-product.

3. The process according to claim 1 or 2, **characterized in that** said first and second operative phases are effected in continuous.

4. The process according to one or more of the previous claims from 1 to 3, **characterized in that** the first phase for the formation of a liquid mixture inside the upper tank (10) is effected at a temperature ranging from 80 to 100°C, under stirring, at a rate ranging from 90 to 120 rpm.

5. The process according to one or more of the previous claims from 1 to 4, **characterized in that** the addition and hot mixing of at least one thickening and stabilizing ingredient, such as flour, in the lower horizontal cylinder (20) during the second phase for transforming said liquid mixture into a pasty compound, takes place at a temperature ranging from 60 to 80°C, under stirring at a rate ranging from 15 to 50 rpm, for a time ranging from 1 to 15 minutes, and at a rate ranging from 95 to 140 rpm for a time ranging from 1 to 20 minutes, said step being followed by a cooling step of the compound to a temperature ranging from 30 to 60°C at a mixing rate ranging from 15 to 50 rpm.

6. The process according to one or more of the previous claims from 1 to 5, **characterized in that** the addition and cold mixing of at least one thickening and gelling ingredient, such as eggs, in the lower horizontal cylinder (20) during the second phase for transforming said liquid mixture into a pasty compound, takes place at a temperature ranging from 20 to 60°C, under stirring at a rate ranging from 75 to 100 rpm, for a time established by the user, said step being followed by a mixing step of the end-compound at a mixing rate ranging from 15 to 50 rpm.

## Patentansprüche

1. Prozess für die Herstellung einer teigartigen Nahrungsmittelzusammensetzung, die bei der Gebäckherstellung und Gastronomie verwendet wird, wie Brandteig oder dergleichen, wobei der Prozess umfasst:
- eine erste Phase für die Bildung eines flüssigen Gemischs basierend auf einer Flüssigkeit und festen Bestandteilen;
- einer zweiten Phase zum Umwandeln des flüssigen Gemischs in eine teigartige Zusammensetzung durch den Zusatz fester oder halbflüssiger Verdickungsmittel, wie Mehl und/oder Eier, die innerhalb eines unteren horizontalen Zylinders gemischt werden,
**dadurch gekennzeichnet, dass** der Prozess innerhalb einer Maschine (1) bewirkt wird, die zumindest einen oberen Tank (10) und zumindest einen unteren horizontalen Zylinder (20) umfasst, wobei der Tank (10) und der Zylinder (20) mit einem Rühr- und/oder Mischmittel und einem Heiz-/Kühlmittel versehen sind,
wobei der obere Tank (10) und der untere horizontale Zylinder (20) funktional miteinander mittels eines Kanals (30) verbunden sind und das Flüssigkeitsgemisch durch Schwerkraft zu dem unteren Zylinder (20) übertragen wird,
wobei das Verfahren umfasst, dass:
- die erste Phase für die Bildung eines flüssigen Gemischs basierend auf einer Flüssigkeit und festen Bestandteilen innerhalb des oberen Tanks (10) bewirkt wird;
- die zweite Phase zum Umwandeln des flüssigen Gemischs in eine teigartige Zusammensetzung durch den Zusatz fester oder halbflüssiger Verdickungsmittel, wie Mehl und/oder Eier, die innerhalb eines unteren horizontalen Zylinders gemischt werden, innerhalb des unteren horizontalen Zylinders (20) bewirkt wird.

2. Prozess nach Anspruch 1, **dadurch gekennzeichnet, dass** die erste Phase für die Bildung eines flüssigen Gemischs das Heißrühren fester und flüssiger Bestandteile, wie Wasser, Butter und Salz, in dem oberen Tank (10) umfasst, während die zweite Phase zum Umwandeln des flüssigen Gemischs in dem unteren horizontalen Zylinder (20) umfasst:
- den Zusatz und das Heißmischen zumindest eines Verdickungs- und Stabilisierungsbestandteils, wie Mehl;
- Kühlen des Gemischs;
- den Zusatz und Kaltmischen zumindest eines Verdickungs- und Geliermittels, wie Eiern;
- Mischen des Endprodukts.

3. Prozess nach einem der Ansprüche 1 oder 2, **dadurch gekennzeichnet, dass** die erste und zweite operative Phase kontinuierlich bewirkt werden.

4. Prozess nach einem der Ansprüche 1 bis 3, **dadurch gekennzeichnet, dass** die erste Phase für die Bildung eines flüssigen Gemischs innerhalb des oberen Tanks (10) bei einer Temperatur im Bereich von 80 bis 100°C unter Rühren mit einer Rate im Bereich von 90 bis 120 U/min bewirkt wird.

5. Prozess nach einem der Ansprüche 1 bis 4, **dadurch gekennzeichnet, dass** der Zusatz und das Heißmischen zumindest eines Verdickungs- und Stabilisierungsbestandteils, wie Mehl, in dem unteren horizontalen Zylinder (20) während der zweiten Phase zum Umwandeln des flüssigen Gemischs in eine teigartige Zusammensetzung bei einer Temperatur im Bereich von 60 bis 80°C unter Rühren mit einer Rate im Bereich von 15 bis 50 U/min für eine Zeitdauer im Bereich von 1 bis 15 Minuten und bei einer Rate im Bereich von 95 bis 140 U/min für eine Zeit im Bereich von 1 bis 20 Minuten stattfindet, wobei dem Schritt ein Kühlschritt der Zusammensetzung auf eine Temperatur im Bereich von 30 bis 60°C bei einer Mischrate im Bereich von 15 bis 50 U/min folgt.

6. Prozess nach einem der Ansprüche 1 bis 5, **dadurch gekennzeichnet, dass** der Zusatz und das Kaltmischen zumindest eines Verdickungs- und Gelierbestandteils, wie Eiern, in dem unteren horizontalen Zylinder (20) während der zweiten Phase zum Umwandeln des flüssigen Gemischs in eine teigartige Zusammensetzung bei einer Temperatur im Bereich von 20 bis 60°C unter Rühren mit einer Rate im Bereich von 75 bis 100 U/min für eine durch den Nutzer eingerichtete Zeit erfolgt, wobei dem Schritt ein Mischschritt der Endzusammensetzung mit einer Mischrate im Bereich von 15 bis 50 U/min folgt.

## Revendications

1. Processus pour la préparation d'un composé alimentaire pâteux destiné à être utilisé pour la fabrication de pâtisserie et la gastronomie, comme de la pâte à choux ou autre, ledit processus comprenant :
une première phase pour la formation d'un mélange liquide basé sur des ingrédients liquides et solides ;
une seconde phase pour transformer ledit mélange liquide en un composé pâteux par l'addition d'épaississants solides ou semi-liquides, comme de la farine et/ou des oeufs, qui sont mélangés à l'intérieur d'un cylindre horizontal inférieur,
**caractérisé en ce que** ledit processus est effectué à l'intérieur d'une machine (1) comprenant au moins un réservoir supérieur (10) et au moins un cylindre horizontal inférieur (20), ledit réservoir (10) et ledit cylindre (20) étant pourvus de moyens d'agitation et/ou de mélange et de moyens de chauffage/refroidissement,
ledit réservoir supérieur (10) et ledit cylindre horizontal inférieur (20) étant interconnectés fonctionnellement ensemble au moyen d'un conduit (30) et ledit mélange liquide étant transféré vers ledit cylindre (20) par gravité,
le procédé permet que ;
ladite première phase pour la formation d'un mélange liquide à partir d'ingrédients liquides et solides est effectuée à l'intérieur dudit réservoir supérieur (10) ;
ladite seconde phase pour transformer ledit mélange liquide en un composé pâteux par l'addition d'épaississants solides ou semi-liquides, comme de la farine et/ou des oeufs, mélangés à l'intérieur d'un cylindre horizontal inférieur, est effectuée à l'intérieur dudit cylindre horizontal inférieur (20).

2. Processus selon la revendication 1, **caractérisé en ce que** ladite première phase pour la formation d'un mélange liquide comprend l'agitation à chaud d'ingrédients liquides et solides comme de l'eau, du beurre et du sel dans le réservoir supérieur (10), alors que la seconde phase pour transformer ledit mélange liquide comprend, dans le cylindre horizontal inférieur (20) :
l'addition et le mélange à chaud d'au moins un ingrédient d'épaississement et de stabilisation, comme de la farine ;
de refroidir le mélange ;
l'addition et le mélange à froid d'au moins un agent épaississant et gélifiant, comme des oeufs ;
de mélanger le produit final.

3. Processus selon la revendication 1 ou 2, **caractérisé en ce que** lesdites première et seconde phases opérationnelles sont effectuées en continu.

4. Processus selon une ou plus des revendications précédentes de 1 à 3, **caractérisé en ce que** la première phase pour la formation d'un mélange liquide à l'intérieur du réservoir supérieur (10) est effectuée à une température comprise entre 80 et 100°C, en agitant, à une vitesse comprise entre 90 et 120 tpm.

5. Processus selon une ou plus des revendications précédentes de 1 à 4, **caractérisé en ce que** l'addition et le mélange à chaud d'au moins un ingrédient d'épaississement et de stabilisation, comme de la farine, dans le cylindre horizontal inférieur (20) pendant la seconde phase pour transformer ledit mélange liquide en un composé pâteux, a lieu à une température située entre 60 et 80°C, en agitant à une vitesse allant de 15 à 50 tpm, pendant un temps de allant 1 à 15 minutes, et à une vitesse allant de 95 à 140 tpm pendant un temps allant de 1 à 20 minutes, ladite étape étant suivie par une étape de refroidissement du composé à une température allant de 30 à 60°C à une vitesse de mélange allant de 15 à 50 tpm.

6. Processus selon une ou plus des revendications précédentes de 1 à 5, **caractérisé en ce que** l'addition et le mélange à froid d'au moins un agent épaississant et gélifiant, comme des oeufs, dans le cylindre horizontal inférieur (20) pendant la seconde phase pour transformer ledit mélange liquide en un composé pâteux, a lieu à une température comprise entre 20 et 60°C, en agitant à une vitesse allant de 75 à 100 tpm, pendant un temps établi par l'utilisateur, ladite étape étant suivie par une étape de mélange du composé final à une vitesse de mélange de allant de 15 à 50 tpm.
